# EUROPÄISCHE PATENTSCHRIFT

(11) **EP 3 596 499 B1**
(45) Veröffentlichungstag und Bekanntmachung des Hinweises auf die Patenterteilung: **04.12.2024**
(21) Anmeldenummer: 18700736.4
(22) Anmeldetag: 15.01.2018
(51) Int. Cl.: G01S 13/34, G01S 13/536

(54) **VERFAHREN ZUM BESTIMMEN EINES ABSTANDES UND EINER GESCHWINDIGKEIT EINES OBJEKTES**
METHOD FOR DETERMINING THE DISTANCE AND SPEED OF AN OBJECT
PROCÉDÉ DESTINÉ À DÉTERMINER UNE DISTANCE ET UNE VITESSE D'UN OBJET

(30) Priorität: 17.03.2017 DE 102017105783
(43) Veröffentlichungstag der Anmeldung: 22.01.2020
(73) Patentinhaber: S.M.S. Smart Microwave Sensors GmbH, 38108 Braunschweig (DE)
(72) Erfinder: MENDE, Ralph, 38108 Braunschweig (DE)
(74) Vertreter: Gramm, Lins & Partner Patent- und Rechtsanwälte PartGmbB
(86) Internationale Anmeldenummer: PCT/EP2018/050858
(87) Internationale Veröffentlichungsnummer: WO 2018/166668

(56) Entgegenhaltungen:
- DE-A1- 102006 032 539
- DE-A1- 102011 051 969
- DE-A1- 102012 008 350
- DE-A1- 102013 008 607
- US-A1- 2014 197 983

## Beschreibung

Die Erfindung betrifft ein Verfahren zum Bestimmen eines Abstandes und einer Radialgeschwindigkeit eines Objektes relativ zu einem Messort, wobei das Verfahren die folgenden Schritte aufweist:
a) Aussenden erster Sendesignale, die Radarstrahlung in Form von ersten Frequenzrampen sind,
b) Aussenden zweiter Sendesignale, die Radarstrahlung in Form von zweiten Frequenzrampen sind, wobei die zweiten Frequenzrampen von den ersten Frequenzrampen verschieden sind,
c) Empfangen von Empfangssignalen, die an dem Ort reflektierte erste und zweite Sendesignale sind,
d) Mischen der Empfangssignale mit den ersten oder zweiten Sendesignalen zu Mischsignalen,
e) Erstellen einer Range-Doppler-Matrix aus den Mischsignalen,
f) Detektieren von zwei Dopplerfrequenzen, die aus der Radialgeschwindigkeit des Objektes stammen und
g) Auswerten der Dopplerfrequenzen und/oder von Phaseninformationen der Mischsignale, so dass die Mehrdeutigkeiten beim Bestimmen der Radialgeschwindigkeit behoben werden.

Die Erfindung betrifft zudem eine Vorrichtung zum Durchführen eines derartigen Verfahrens.

Die ersten Sendesignale werden auch als Signal A und die zweiten Sendesignale als Signal B bezeichnet.

Ein derartiges Verfahren ist beispielsweise aus der DE 10 2012 008 350 A1 bekannt.

Am Messort befindet sich ein Radarsender und ein entsprechender Empfänger. Es ist bekannt, mittels geeignet modulierter Radarsignale mit einer Messung sowohl den Abstand als auch eine Radialgeschwindigkeit eines Objektes relativ zu diesem Messort zu bestimmen. Dabei werden unterschiedliche Frequenzrampen in Form von ersten und zweiten Sendesignalen ineinander verschachtelt ausgesandt.

Zuvor war es bekannt, lediglich ein Sendesignal mit kurzen, schnellen und identischen Rampen zu modulieren. Während einer Zykluszeit von beispielsweise 65 ms Länge können beispielsweise 256 derartige Rampen moduliert werden, die herkömmlicherweise mit steigender Frequenz durchlaufen werden. Zu Beginn der Rampe hat das ausgesandte Signal folglich eine Startfrequenz, die mit einer festgelegten Steigung ansteigt bis am Ende einer jeden Rampe eine Endfrequenz erreicht wird. Jede dieser beispielsweise 256 Rampen hat beispielsweiseeine Länge von 254 µs. Wenn nun jede Rampe mit 512 Abtastwerten abgetastet wird, entspricht dies einer Abtastfrequenz von 2,01 MHz.

Es wird dann eine erste Auswertung pro Rampe in Form einer ersten Fast-FourrierTransformation (FFT) ausgeführt. Eine zweite FFT erfolgt von Rampe zu Rampe, also mit einer effektiven Abtastperiode von 254 µs, was einer effektiven Abtastfrequenz von 3,94 kHz entspricht. Die erste FFT mit einer Abtastfrequenz von 2,01 MHz wird als "Range-FFT" bezeichnet. Die zweite FFT mit einer Abtastfrequenz von 3,94 kHz wird als "Doppler-FFT" bezeichnet. Dabei wurde das Beispiel insoweit idealisiert, dass Rampenrücksprungzeiten zwischen den eigentlichen Rampen vernachlässigt wurden.

Ein Dopplerfrequenzbereich von 3,94 kHz entspricht einem eindeutigen Geschwindigkeitsmessbereich von 24,5 m/s bei einer Trägerfrequenz von 24,125 GHz. Als Frequenzhub f_{sw} für jede Rampe, also die Differenz zwischen Endfrequenz und Startfrequenz, können beispielsweise 150 MHz angenommen werden.

Solange die zu messende Radialgeschwindigkeit des Objektes kleiner als der eindeutige Messbereich von 24,5 m/s ist, lässt sich diese Geschwindigkeit eindeutig bestimmen. Bei einer größeren Radialgeschwindigkeit von beispielsweise 40 m/s wird eine Geschwindigkeit von 15,5 m/s bestimmt.

Während die erste FFT (Range-FFT) für jede Rampe ausgeführt wird, so dass bei 256 Rampen auch 256 Frequenzspektren der ersten FFT vorliegen, wird die zweite FFT (Doppler-FFT) vorzugsweise für jeden Entfernungswert ("Entfernungstor") durchgeführt. Es ist allerdings auch möglich die zweite FFT nur für ausgewählte Entfernungswerte durchzuführen. Das Ergebnis der beiden FFT lässt sich in einer Range-Doppler-Matrix darstellen. Um den relativ kleinen Eindeutigkeitsbereich der Doppler-FFT zu vergrößern, wird in der DE 10 2012 008 350 A1 vorgeschlagen, zwei unterschiedliche Frequenzrampen abwechselnd auszusenden. Diese unterschiedlich ausgebildeten Frequenzrampen werden getrennt verarbeitet. Da die unterschiedlichen Frequenzrampen abwechselnd ausgesendet werden, ist während eines Messzyklus die Anzahl der jeweils gleichen Frequenzrampen gegenüber dem Aussenden identischer Rampen jeweils um die Hälfte reduziert, wodurch auch die effektive Abtastfrequenz für die Doppler-FFT reduziert und damit auch der Eindeutigkeitsbereich verringert wird. Da die zu bestimmende Dopplerfrequenz jedoch von der Trägerfrequenz und damit von der Art der ausgesandten Frequenzrampe abhängt, lassen sich auf diese Weise zwei Dopplerfrequenzen mit zwei Phaseninformationen gewinnen, die in Kombination verwendet werden können, um den Eindeutigkeitsbereich der Doppler-FFT stark zu vergrößern.

Nachteilig ist, dass für jede einzelne ausgesandte Rampenart der Eindeutigkeitsbereich der Doppler-FFT reduziert wird und zudem aufgrund der geringeren Anzahl der einzelnen Rampen einer Rampenart auch das Signal-Rausch-Verhältnis reduziert und damit die Qualität der Messwerte verschlechtert wird.

Aus der DE 10 2006 032 539 A1 ist ein FMCW-Radarsensor mit mehreren Antennenelementen bekannt, die mit Sendesignalen mit rampenförmig modulierten Frequenzen versorgt werden. Der Sensor ist in einem Fernbereichsmodus, bei dem die Frequenzen aller Sendesignale identisch sind, und in einem Nahbereichsmodus, in dem die Frequenzen der Sendesignale untereinander jeweils einen bestimmten Frequenzversatz aufweisen. Die Auswertung der erhaltenen Signale erfolgt durch schnelle Fourier-Transformation.

Die DE 10 2013 008 607 A1 betrifft ein Verfahren zum Bestimmen von Abstand und Relativgeschwindigkeit eines Objekts zu einem Beobachtungspunkt, wobei ineinander verschachtelte Signale ausgesandt werden. Die von dem Objekt zurückgewordenen Echosignale werden unter Verwendung der schnellen Fourier-Transformation ausgewertet.

US 2014/197983 A1 beschreibt ein Multifrequenz-Radarsystem, bei welchem Radarsignale in Form von Frequenzrampen ausgesendet werden.

Die DE 2011 051 969 A1 betrifft ein Radargerät, welches erste und zweite Signale aussendet, wobei das erste und zweite Signal einen Frequenzversatz zueinander aufweisen.

Der Erfindung liegt daher die Aufgabe zugrunde, ein gattungsgemäßes Verfahren so zu verbessern, dass der Eindeutigkeitsbereich der Doppler-FFT vergrößert und gleichzeitig das Signal-Rausch-Verhältnis verbessert wird.

Die Erfindung löst die gestellte Aufgabe durch ein Verfahren gemäß dem Oberbegriff des Anspruchs 1, das sich dadurch auszeichnet, dass die ersten Sendesignale und die zweiten Sendesignale gleichzeitig ausgesandt werden.

Während beim Verfahren aus dem Stand der Technik die beiden Frequenzrampen immer abwechselnd gesendet werden, werden erfindungsgemäß beide Frequenzrampen gleichzeitig gesendet, so dass sich die Anzahl der während eines Messzyklus ausgesandten Rampen verdoppelt. Da beide Sendesignale gleichzeitig ausgesandt werden, werden diese auch beide am zu detektierenden Objekt reflektiert, so dass auch die Empfangssignale aus zwei Einzelsignalen bestehen. Dennoch werden die Empfangssignale nur mit einem der ausgesandten Sendesignale gemischt, um die Mischsignale zu erhalten. Diese Mischsignale werden dann wie im Stand der Technik der zweidimensionalen FFT unterzogen, so dass eine Range-Doppler-Matrix erstellt wird. Da die Mischsignale beim erfindungsgemäßen Verfahren jedoch aus Empfangssignalen erzeugt werden, die zwei Anteile korrespondierend zu den zwei ausgesandten Sendesignalen aufweisen, treten in der zweidimensionalen FFT nun zwei Frequenzpeaks für jedes zu detektierende Objekt auf, die aus den unterschiedlichen Frequenzen der beiden ausgesandten Sendesignale und damit der beiden empfangenen Empfangssignale entstehen. Diese können einfach bei einem bekannten Frequenzversatz der beiden ausgesandten Sendesignale verwendet werden, um die Information über den Abstand des Objektes vom Messort und eine eindeutige Dopplerfrequenz zu errechnen.

Wie im Stand der Technik auch werden zudem zwei Dopplerfrequenzen bestimmt, die sich aufgrund der sich unterscheidenden Trägerfrequenzen der beiden Sendesignale ebenfalls leicht unterscheiden. Diese Dopplerfrequenzen und/oder Phaseninformationen aus den Mischsignalen werden in gewohnter Weise verwendet, um die Mehrdeutigkeit der Doppler-FFT zu beheben. Der Vorteil des erfindungsgemäßen Verfahrens liegt im Vergleich zum Stand der Technik darin, dass die effektive Abtastrate der Doppler-FFT verdoppelt werden konnte und somit einerseits der Eindeutigkeitsbereich für jede einzelne bestimmte Dopplerfrequenz vergrößert werden konnte und andererseits eine größere Anzahl von Messwerten für jede Dopplerfrequenz zur Verfügung steht, so dass auch das Signal-Rausch-Verhältnis verbessert werden konnte.

Da noch immer nur eine einzige Range-Doppler-Matrix erstellt werden muss, ist der Rechenaufwand im Vergleich zum Verfahren aus dem Stand der Technik kaum gestiegen.

Vorteilhafterweise sind die Frequenzrampen abfallende Frequenzrampen. Dies bedeutet, eine jede Frequenzrampe beginnt mit der Endfrequenz, die die größte Frequenz der Frequenzrampe ist, und endet bei der Startfrequenz, die die kleinste Frequenz der Frequenzrampe ist. Selbstverständlich ist es auch möglich, die einzelnen Frequenzrampen als aufsteigende Frequenzrampen zu verwenden und mit der kleinsten Frequenz beginnend bis zur größten Frequenz die Sendesignale durchzustimmen.

In einer bevorzugten Ausgestaltung sind die ersten Frequenzrampen und die zweiten Frequenzrampen parallele Frequenzrampen, mit einem Frequenzversatz df.

Die bedeutet, dass zu jedem Zeitpunkt die ausgesandte Frequenz der beiden Sendesignale eine Differenz df aufweisen. Ein konstanter Frequenzversatz vereinfacht die durchzuführenden Rechnungen. Der Frequenzversatz der beiden Peaks nach der ersten Range-FFT enthält Informationen über den Frequenzversatz df, die, sofern er konstant und bekannt ist, leicht herausgerechnet werden können.

In einer bevorzugten Ausgestaltung ist der Frequenzversatz df ein ganzzahliges Vielfaches von f/k, wobei k eine Länge der Range-FFT und f die Abtastfrequenz ist, mit der diese Messwerte aufgenommen werden. Vorzugsweise ist das ganzzahlige Vielfache mindestens 5, vorzugsweise mindestens 7 und höchstens 20, vorzugsweise höchstens 15.

Bei der Berechnung der Range-Doppler-Matrix wird zunächst die Range-FFT berechnet. Bei einer Abtastung von beispielsweise 512 Messwerten (samples) pro Rampe würde pro Rampe eine Range-FFT der Länge 512 zu berechnen sein. Anschließend erfolgt die Berechnung der Doppler-FFT pro Rangegate. Aufgrund eines geringeren Eindeutigkeitsbereiches der Range-FFT, insbesondere bei einkanaliger Abtastung, wird in der Regel die Doppler-FFT nicht für alle Range-Gates berechnet. Oftmals werden nur etwas weniger als die Hälfte, beispielsweise das 0,4-fache der möglichen Anzahl berechnet. In diesem Fall würde die Doppler-FFT folglich nur für 204 der möglichen 512 Range Gates (Entfernungstore) berechnet werden.

Jedes dieser Entfernungstore entspricht dann einer Frequenz von f/k, wobei k, wie bereits dargelegt, die Länge der Range-FFT und f die Abtastfrequenz ist, mit der diese Messwerte aufgenommen oder abgetastet werden.

Bei einer Abtastfrequenz f von 10 MHz und einer Anzahl k von 512 entspricht eine derartige Range Gate Frequenz oder Entfernungstorfrequenz 19,53 kHz. Ein ganzzahliges Vielfaches von 5 dieser Frequenz entspricht folglich einem Frequenzversatz df von 97,65 kHz, ein Vielfaches von 15 entspricht einem Frequenzversatz von df= 292,95 kHz. Bei anderen Abtastfrequenzen oder anderen Anzahlen von Messwerten pro Rampe ergeben sich selbstverständlich andere Frequenzen.

Die Verwendung eines derart kleinen Frequenzversatzes sorgt dafür, dass die Mischsignale, die durch das Mischen der empfangenen Empfangssignale mit einem der beiden Sendesignale in einem relativ kleinen Frequenzbereich angeordnet sind. Wird ein Bandpassfilter hinter dem Mischer verwendet, bevor die Signale weiter verarbeitet werden , kann dieser vorzugsweise so gewählt werden, dass die gesamten Mischsignale den Bandpassfilter passieren können und so lediglich eine einzige Range-Doppler-Matrix erstellt werden muss, um beide Frequenzpeaks detektieren zu können. Ist der Frequenzversatz df zu groß, hat dies zur Folge, dass auch die Mischsignale entsprechend weit auseinanderliegende Frequenzanteile aufweisen, die gegebenenfalls nicht vollständig einen einzigen Bandpassfilter passieren können.

In einer bevorzugten Ausführungsform werden die ersten Sendesignale durch eine erste Sendeantenne und die zweiten Sendesignale durch eine zweite Sendeantenne ausgesandt.

Alternativ dazu sind zwar zwei Sendeantennen vorgesehen, diesen ist jedoch keines der ersten Sendesignale oder zweiten Sendesignale fest zugeordnet. Vielmehr senden in diesem Fall bevorzugt die erste Sendeantenne und die zweite Sendeantenne jeweils abwechselnd die ersten Sendesignale und die zweiten Sendesignale.

Diese Ausführungsformen sind insbesondere dann von Vorteil, wenn neben dem Abstand und der Radialgeschwindigkeit auch eine Richtung, in der sich das Objekt befindet, ermittelt werden soll. Dazu ist eine Winkelauflösung vorteilhaft, die durch die Verwendung mehrerer Sendeantennen, die die unterschiedlichen Sendesignale aussenden, verbessert werden kann.

Alternativ dazu ist es selbstverständlich auch möglich, dass die ersten Sendesignale und die zweiten Sendesignale von einer einzigen Sendeantenne ausgesandt werden. Dies ist insbesondere dann von Vorteil, wenn eine Verbesserung der Winkelauflösung nicht benötigt wird, da in diesem Fall der apparative Aufwand deutlich reduziert werden kann.

In einer bevorzugten Ausgestaltung werden die Empfangssignale durch mehrere, bevorzugt mindestens vier, besonders bevorzugt mindestens acht Empfangsantennen empfangen. Da die verschiedenen Empfangsantennen räumlich voneinander getrennt angeordnet sind, wobei sie bevorzugt äquidistant angeordnet sind, haben die von den Sendeantennen ausgesandten Sendesignale, nachdem sie vom Objekt reflektiert wurden, leicht unterschiedliche Laufzeiten, bevor sie zu den verschiedenen Empfangsantennen gelangen. Aus diesen Laufzeitunterschieden und/oder den sich daraus ergebenden Phasenunterschieden lässt sich eine Winkelinformation und damit die Information über die Richtung, in der sich das Objekt befindet, extrahieren. Zudem lassen sich verschiedene Objekte auch im Winkel trennen und auf diese Weise separieren. Je mehr Empfangskanäle verwendet werden, desto besser ist diese Trennfähigkeit. Werden gleichzeitig wenigstens zwei Sendeantennen verwendet, die entweder jeweils das erste und das zweite Sendesignal oder jeweils abwechselnd die ersten und zweiten Sendesignale aussenden, lässt sich durch geschickte Wahl und Anordnung der einzelnen Antennen zueinander ein virtuelles Antennenarray erzeugen, das größer ist als die tatsächliche Anzahl der physisch vorhandenen Empfangsantennen. Dieses MIMO-Prinzip genannte Verfahren ist aus dem Stand der Technik bekannt, wobei die Abkürzung für Multiple Input Multiple Output steht.

Ein Ausführungsbeispiel des Verfahrens gemäß der vorliegenden Erfindung, bei dem die ersten und die zweiten Sendesignale von unterschiedlichen Sendeantennen ausgesandt und anschließend die reflektierten Empfangssignale von einer Mehrzahl verschiedener Empfangsantennen empfangen werden, erlaubt nicht nur das erfindungsgemäß ohnehin vorhandene verbesserte Signal-Rausch-Verhältnis und den größeren Eindeutigkeitsbereich der Doppler-FFT, sondern erlaubt zudem eine sehr genaue Winkelauflösung und damit eine sehr genaue Bestimmung der Richtung, in der sich das Objekt befindet.

In einer bevorzugten Ausgestaltung des Verfahrens werden dritte und vierte Sendesignale in Form von dritten und vierten Frequenzrampen gleichzeitig ausgesandt, wobei abwechselnd erste und zweite Sendesignale und dritte und vierte Sendesignale gesendet werden. Durch insgesamt vier unterschiedliche Sendesignale können vier unterschiedliche Dopplerfrequenzen durch die Doppler-FFT ermittelt werden und aus diesen und/oder den Phaseninformationen der Mischsignale der Eindeutigkeitsbereich weiter vergrößert werden. Werden dritte und vierte Sendesignale ausgesendet, werden die aus ihnen resultierenden reflektierten Empfangssignale empfangen und nur mit den dritten Sendesignalen oder den vierten Sendesignalen gemischt. Selbstverständlich können sie auch mit den ersten oder zweiten Sendesignalen gemischt werden. Vorzugsweise sind die vier unterschiedlichen Sendesignale parallele Frequenzrampen mit unterschiedlichen Frequenzversatzwerten. Selbstverständlich können auch vier Sendesignale gleichzeitig ausgesandt werden. Werden die Frequenzversatzwerte klein genug gewählt, können die Mischsignale, die aus derartigen Sendesignalen hervorgehen, wenn die entsprechenden Empfangssignale empfangen und mit wenigstens einem der Sendesignale gemischt werden, weiterhin durch einen einzigen Bandpassfilter geleitet werden, so dass auch in diesem Fall nur eine einzige Range-Doppler-Matrix erzeugt und errechnet werden muss. Die dritten und vierten Sendesignale können zudem dazu verwendet werden, eine Trennfähigkeit in Winkel zu verbessern, durch die verschiedene Objekte getrennt und so separiert werden können.

In einer bevorzugten Ausgestaltung sind die dritten und vierten Sendesignale parallele Frequenzrampen, die vorzugsweise abfallende Frequenzrampen sind. Selbstverständlich können sie auch als aufsteigende Frequenzrampen ausgebildet sein.

In einer bevorzugten Ausgestaltung des Verfahrens wird zudem ein Teil des ersten oder zweiten Sendesignals, ohne dass es von einer Sendeantenne ausgesandt wird, mit dem jeweils anderen Sendesignal gemischt. Wird aus dem so entstandenen Mischsignal eine Range-Doppler-Matrix errechnet, führt die Mischung der beiden Sendesignale zu einem Peak, dessen Abstand in Richtung der Range-FFT genau dem Frequenzversatz entspricht, da keine Dopplerfrequenz involviert ist. Die Frequenz und/oder Phaseninformation des entsprechenden Mischsignals kann verwendet werden, um Aussagen und Kontrollmessungen über die Qualität der Sendesignalgeneratoren zu erhalten.

Mit Hilfe der nachfolgenden Zeichnungen wird ein Ausführungsbeispiel der vorliegenden Erfindung näher erläutert. Es zeigt:
- Figur 1 -: einen Kurvenverlauf und schematische Auswertungssignale zur Bildung einer Range-Doppler-Matrix durch zweidimensionale FFT gemäß dem Stand der Technik,
- Figur 2 -: einen Signalverlauf gemäß einem Ausführungsbeispiel der vorliegenden Erfindung,
- Figur 3 -: die schematische Darstellung des Ergebnisses in einer RangeDoppler-Matrix und
- Figur 4 -: die schematische Darstellung einer Schaltung für eine Vorrichtung gemäß einem Ausführungsbeispiel der vorliegenden Erfindung.

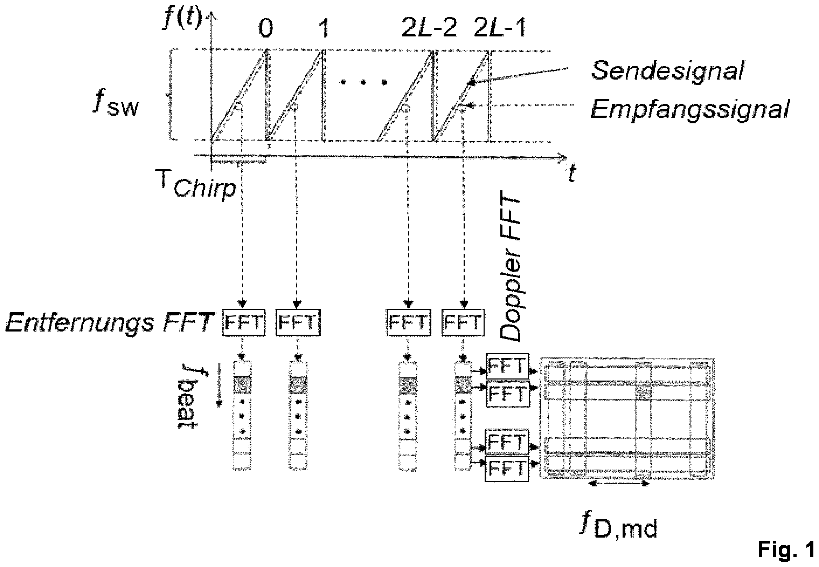

Figur 1 zeigt schematisch, wie eine Range-Doppler-Matrix errechnet werden kann. Im oberen Bereich der Figur 1 mit durchgezogener Linie ist die Frequenz des Sendesignals als Funktion der Zeit aufgetragen. Man erkennt ansteigende Rampen, die von einer Startfrequenz, die die kleinste Frequenz der Rampen ist, bis zu einer Endfrequenz, die die größte Frequenz der Rampen ist, durchlaufen werden. In gestrichelten Linien leicht versetzt dazu ist das entsprechende Empfangssignal dargestellt, das von einer Empfangseinrichtung der Vorrichtung aufgefangen wird, nachdem es am Objekt, dessen Abstand und Geschwindigkeit bestimmt werden soll, reflektiert wurde.

Dieses Empfangssignal wird mit dem Sendesignal gemischt und anschließend der 2D-FFT unterworfen, um die Range-Doppler-Matrix zu erstellen. Dabei wird, wie in Figur 1 dargestellt, zunächst die erste FFT (Range-FFT) durchgeführt. Diese wird für jede Rampe durchgeführt, so dass beispielsweise bei den 2L = 256 ausgesandten Rampen die im oberen Bereich der Figur 1 dargestellt sind, 2L=256 Range-FFTs durchgeführt werden müssen.

Die Rampen werden nicht kontinuierlich vermessen, sondern beispielsweise mit k=512 Abtastwerten abgetastet. Für jeden dieser Abtastwerte, der einen bestimmten Frequenzwert innerhalb der Rampe entspricht, wird die zweite FFT (Doppler-FFT) durchgeführt. Dabei kann es sinnvoll sein, nur für die Entfernungswerte die zweite FFT durchzuführen, die dem interessierenden Entfernungsbereich entsprechen.

Das Ergebnis ist die rechts unten in Figur 1 dargestellte Range-Doppler-Matrix, in der Frequenzpeaks bei einer Beat-Frequenz, die im Wesentlichen dem Abstand des Objektes entspricht, und einer Doppler-Frequenz, die aus der Geschwindigkeit des Objektes herrührt, aufgetragen sind. Dieses Verfahren ist aus dem Stand der Technik bekannt.

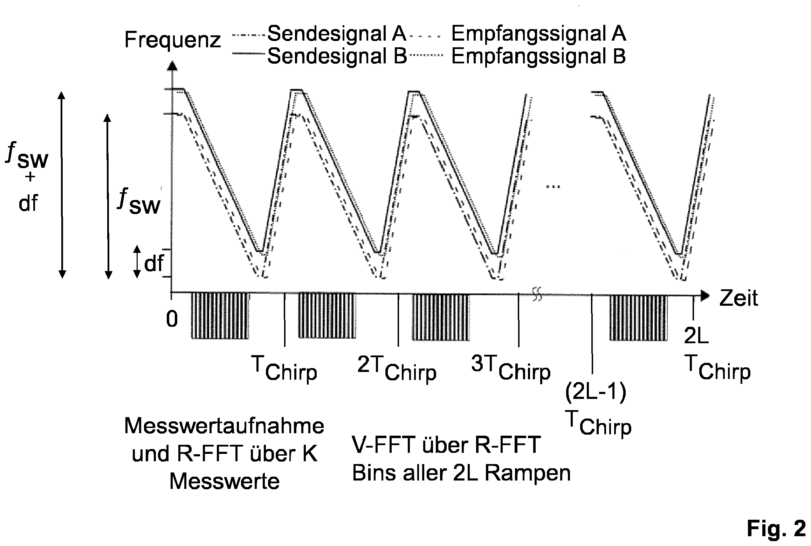

Figur 2 zeigt den Frequenzverlauf bei einem Verfahren gemäß einem Ausführungsbeispiel der vorliegenden Erfindung. Man erkennt eine strich-punktierte Linie und eine durchgezogene Linie, die dem Sendesignal A (TransmitSignal A) und dem Sendesignal B (TransmitSignal B) und somit dem ersten Sendesignal und dem zweiten Sendesignal entsprechen. Sie werden parallel ausgesandt. Dabei handelt es sich um das erste Sendesignal und das zweite Sendesignal, die im vorliegenden Ausführungsbeispiel parallel verlaufende abfallende Frequenzrampen sind. Das erste Sendesignal ist im vorliegenden Ausführungsbeispiel das Signal mit der kleineren Frequenz. Die Frequenzrampe beginnt bei der Endfrequenz und fällt ab bis zur Startfrequenz. Als Startfrequenz wird dabei die kleinste Frequenz einer Frequenzrampe und als Endfrequenz die größte Frequenz einer Frequenzrampe benannt, unabhängig davon, ob der Durchlauf einer Rampe tatsächlich bei dieser Frequenz startet oder endet. Dabei bezeichnet f_{sw} den Frequenzhub, also die Differenz zwischen Endfrequenz und Startfrequenz.

Das zweite Sendesignal ist in Figur 2 das mit der größeren Frequenz. Die zweite Frequenzrampe ist eine gegenüber der ersten Frequenzrampe parallel versetzte Rampe, die um einen Frequenzversatz df versetzt ist.

Die verschiedenen Rampen werden mit einer Abtastfrequenz und einer Abtastrate abgetastet, die im unteren Bereich der Figur 2 dargestellt ist.

Mit einer gestrichelten Linie und einer gepunkteten sind die jeweiligen Empfangssignale dargestellt, die aus der Reflektion der jeweiligen Sendesignale am zu detektierenden Objekt herrühren.

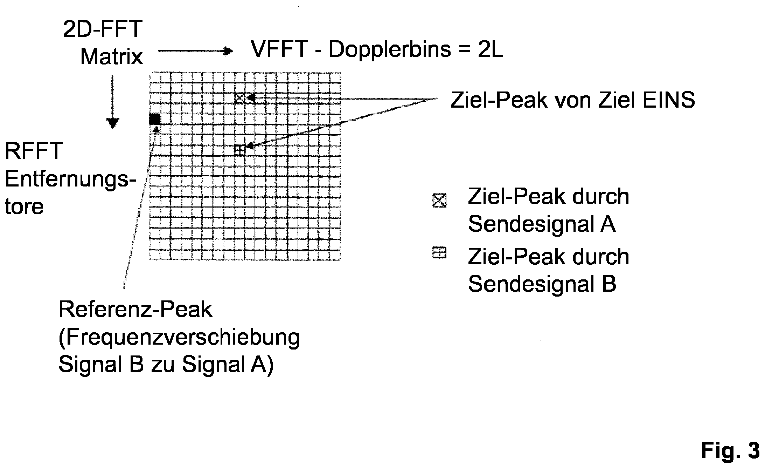

Werden diese mit einem der Sendesignale gemischt und anschließend der bereits bekannten Auswertung zur Berechnung einer Range-Doppler-Matrix unterworfen, ergibt sich das Ergebnis, das in Figur 3 dargestellt ist. Man erkennt die Range-Doppler-Matrix, die zwei Peaks für das Objekt aufweist. Diese beiden Peaks befinden sich in Figur 3 in der gleichen Spalte der Matrix, so dass sie die gleiche oder zumindest nahezu die gleiche Dopplerfrequenz aufweisen. Tatsächlich unterscheiden sich die beiden Dopplerfrequenzen leicht, da die Trägerfrequenzen der verschiedenen Signale leicht unterschiedlich sind. Da die Dopplerfrequenz jedoch aus der Geschwindigkeit des zu detektierenden Objektes hervorgeht, ist dieser Unterschied sehr gering und in der Range-Doppler-Matrix nicht dargestellt.

Die beiden Peaks sind jedoch in unterschiedlichen Zeilen der Matrix enthalten, was eigentlich auf zwei unterschiedliche Abstände hinweist. Der Abstand zwischen den beiden Peaks entspricht jedoch genau dem Frequenzversatz df der beiden Sendesignale. Er kann leicht zurückgerechnet werden, so dass der tatsächliche Abstand des Objektes vom Messpunkt bestimmt werden kann.

Die Range-Doppler-Matrix in Figur 3 verfügt zudem über einen weiteren Peak, der als Referenzpeak gekennzeichnet ist. Dieser entsteht, wenn das erste Sendesignal mit dem zweiten Sendesignal vermischt wird. Die Zeile des Peaks, die der Frequenzdifferenz zwischen den beiden gemischten Signalen entspricht, die aus der Laufzeitdifferenz hervorgeht, die wegen des Abstandes des Objektes zustande kommt, ist in diesem Fall lediglich der Frequenzversatz, so dass hier eine einfache Kontrollmöglichkeit gegeben ist.

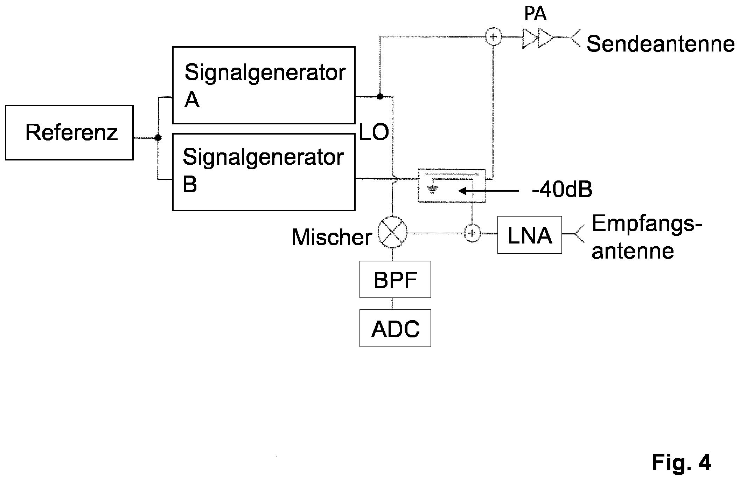

Figur 4 zeigt die schematische Anordnung einer Vorrichtung zur Durchführung eines derartigen Verfahrens. Von einer Referenzquelle, die beispielsweise als Quarz ausgebildet sein kann, werden Referenzsignale erzeugt, die in zwei digitale Signalgeneratoren eingespeist werden. Die Signalgeneratoren sind aus dem Stand der Technik bekannte Bauteile, so dass auf eine nähere Beschreibung verzichtet wird. Die beiden Signalgeneratoren erzeugen das Sendesignal A, und das Sendesignal B. Beide werden auf die Sendeantenne ("TX-Antenna") gegeben und von der gleichen Antenne ausgesandt. Alternativ können sie selbstverständlich auch auf verschiedene Sendeantennen geleitet werden, die die unterschiedlichen Signale aussenden. Dabei kann es auch zum abwechselnden Aussenden der unterschiedlichen Signale durch die beiden Antennen kommen.

Die ausgesandten Signale werden am zu detektierenden Objekt, das in Figur 4 nicht dargestellt ist, reflektiert und durch die Empfangsantenne ("RX-Antenna") aufgefangen. Im mit dem Begriff "Mixer" gekennzeichneten Mischer werden die empfangenen Empfangssignale mit dem ersten Sendesignal gemischt und anschließend durch einen Bandpassfilter (BPF) geleitet und der Auswertung zugeführt. Alternativ können die Empfangssignale selbstverständlich auch mit dem zweiten Sendesignal gemischt werden. Zusätzlich ist ein Koppler vorhanden, durch den ein Teil des zweiten Sendesignals dem Empfangssignal zugeführt wird und somit ebenfalls mit dem ersten Sendesignal gemischt wird. Dadurch entsteht der Referenzpeak, der in der Range-Doppler-Matrix gemäß Figur 3 dargestellt ist.

## Patentansprüche

1. Verfahren zum Bestimmen eines Abstandes und einer Radialgeschwindigkeit eines Objektes relativ zu einem Messort, wobei das Verfahren die folgenden Schritte aufweist:
a) Aussenden erster Sendesignale, die Radarstrahlung in Form von ersten Frequenzrampen sind,
b) Aussenden zweiter Sendesignale, die Radarstrahlung in Form von zweiten Frequenzrampen sind, wobei die zweiten Frequenzrampen von den ersten Frequenzrampen verschieden sind,
c) Empfangen von Empfangssignalen, die an dem Objekt reflektierte erste und zweite Sendesignale sind,
d) Mischen der Empfangssignale mit den ersten oder zweiten Sendesignalen zu Mischsignalen,
e) Erstellen einer Range-Doppler-Matrix aus den Mischsignalen,
f) Detektieren von zwei Dopplerfrequenzen, die aus der Radialgeschwindigkeit des Objektes stammen und
g) Auswerten der Dopplerfrequenzen und/oder von Phaseninformationen der Mischsignale, sodass die Mehrdeutigkeiten beim Bestimmen der Radialgeschwindigkeit behoben werden,
**dadurch gekennzeichnet, dass** die ersten Sendesignale und die zweiten Sendesignale gleichzeitig ausgesandt werden.

2. Verfahren nach Anspruch 1, **dadurch gekennzeichnet, dass** die Frequenzrampen abfallende Frequenzrampen sind.

3. Verfahren nach Anspruch 1 oder 2, **dadurch gekennzeichnet, dass** die ersten und zweiten Frequenzrampen parallele Frequenzrampen mit einem Frequenzversatz df sind.

4. Verfahren nach Anspruch 3, **dadurch gekennzeichnet, dass** df ein ganzzahliges Vielfaches von f/k ist, worin k eine Länge der Range-FFT und f die Abtastfrequenz ist, mit der diese Messwerte aufgenommen werden.

5. Verfahren nach Anspruch 4, **dadurch gekennzeichnet, dass** das ganzzahlige Vielfache mindestens 5, vorzugsweise mindestens 7 und höchstens 20, vorzugsweise höchstens 15 ist.

6. Verfahren nach einem der vorstehenden Ansprüche, **dadurch gekennzeichnet, dass** die ersten Sendesignale durch eine erste Sendeantenne und die zweiten Sendesignale durch eine zweite Sendeantenne ausgesandt werden.

7. Verfahren nach einem der Ansprüche 1 bis 5, **dadurch gekennzeichnet, dass** eine erste Sendeantenne und eine zweite Sendeantenne jeweils abwechselnd die ersten Sendesignale und die zweiten Sendesignale aussenden.

8. Verfahren nach einem der Ansprüche 1 bis 5, **dadurch gekennzeichnet, dass** die ersten Sendesignale und die zweiten Sendesignale mit der gleichen Sendeantenne ausgesandt werden.

9. Verfahren nach einem der vorstehenden Ansprüche, **dadurch gekennzeichnet, dass** die Empfangssignale durch mehrere, bevorzugt mindestens vier, besonders bevorzugt wenigstens acht Empfangsantennen empfangen werden.

10. Verfahren nach einem der vorstehenden Ansprüche, **dadurch gekennzeichnet, dass** dritte und vierte Sendesignale in Form von dritten und vierten Frequenzrampen gleichzeitig ausgesandt werden, wobei abwechselnd erste und zweite Sendesignale und dritte und vierte Sendesignale gesendet werden.

11. Verfahren nach Anspruch 10, **dadurch gekennzeichnet, dass** die dritten und vierten Sendesignale parallele, vorzugsweise abfallende Frequenzrampen sind.

12. Vorrichtung zum Durchführen eines Verfahrens nach einem der vorstehenden Ansprüche.

## Claims

1. A method for determining the distance and radial speed of an object relative to a measuring point, wherein the method comprises the following steps:
a) emitting first transmission signals, which are radar radiation in the form of first frequency ramps,
b) emitting second transmission signals, which are radar radiation in the form of second frequency ramps, wherein the second frequency ramps are different to the first frequency ramps,
c) receiving received signals, which are first and second transmission signals reflected at the object,
d) mixing the received signals with the first or second transmission signals to create mixed signals,
e) creating a range-Doppler matrix using the mixed signals,
f) detecting two Doppler frequencies, which originate from the radial speed of the object, and
g) evaluating the Doppler frequencies and/or phase information of the mixed signals, such that ambiguities are eliminated when determining the radial speed
**characterized by that fact that** the first transmission signals and the second transmission signals are sent out at the same time.

2. The method according to claim 1, **characterized by** the fact that the frequency ramps are sloping frequency ramps.

3. The method according to claim 1 or 2, **characterized by** the fact that the first and second frequency ramps are parallel frequency ramps with a frequency offset df.

4. The method according to claim 3, **characterized by** the fact that df is an integer multiple of f/k, wherein k is a length of the range FFT and f the sampling frequency, with which these measured values can be recorded.

5. The method according to claim 4, **characterized by** the fact that the integer multiple is at least 5, preferably at least 7 and at most 20, preferably at most 15.

6. The method according to one of the above claims, **characterized by** the fact that the first transmission signals are emitted by a first transmitting antenna and the second transmission signals by a second transmitting antenna.

7. The method according to one of the claims 1 to 5, **characterized by** the fact that a first transmitting antenna and a second transmitting antenna respectively emit the first transmission signals and the second transmission signals on an alternating basis.

8. The method according to one of the claims 1 to 5, **characterized by** the fact that the first transmission signal and the second transmission signal are sent out by the same transmitting antenna.

9. The method according to one of the above claims, **characterized by** the fact that the received signals are received by several, preferably at least four, especially preferably at least eight, receiving antennae.

10. The method according to one of the above claims, **characterized by** the fact that third and fourth transmission signals in the form of third and fourth frequency ramps are emitted at the same time, wherein first and second transmission signals and third and fourth transmission signals are sent on an alternating basis.

11. The method according to claim 10, **characterized by** the fact that the third and fourth transmission signals are parallel, preferably sloping, frequency ramps.

12. A device for conducting a method according to one of the above claims.

## Revendications

1. Procédé de détermination d'une distance et d'une vitesse radiale d'un objet par rapport à un endroit de mesure, le procédé comprenant les étapes suivantes consistant à :
a) émettre des premiers signaux d'émission qui sont des rayonnements radar sous forme de premières rampes de fréquence,
b) émettre des deuxièmes signaux d'émission qui sont des rayonnements radar sous forme de deuxièmes rampes de fréquence, les deuxièmes rampes de fréquence étant différentes des premières rampes de fréquence,
c) recevoir des signaux de réception qui sont des premiers et deuxièmes signaux d'émission réfléchis par l'objet,
d) mélanger les signaux de réception avec les premiers ou deuxièmes signaux d'émission pour former des signaux mélangés,
e) créer une matrice de portée/Doppler à partir des signaux mélangés,
f) détecter deux fréquences Doppler provenant de la vitesse radiale de l'objet, et
g) évaluer les fréquences Doppler et/ou les informations de phase des signaux mélangés, de sorte que les ambiguïtés lors de la détermination de la vitesse radiale sont supprimées,
**caractérisé en ce que** les premiers signaux d'émission et les deuxièmes signaux d'émission sont émis simultanément.

2. Procédé selon la revendication 1,
**caractérisé en ce que** les rampes de fréquence sont des rampes de fréquence descendantes.

3. Procédé selon la revendication 1 ou 2,
**caractérisé en ce que** les premières et deuxièmes rampes de fréquence sont des rampes de fréquence parallèles avec un décalage de fréquence df.

4. Procédé selon la revendication 3,
**caractérisé en ce que** df est un multiple entier de f/k, où k est une longueur de la FFT de portée et f est la fréquence d'échantillonnage à laquelle ces valeurs de mesure sont enregistrées.

5. Procédé selon la revendication 4,
**caractérisé en ce que** le multiple entier est de 5 au minimum, de préférence de 7 au minimum, et de 20 au maximum, de préférence de 15 au maximum.

6. Procédé selon l'une des revendications précédentes,
**caractérisé en ce que** les premiers signaux d'émission sont émis par une première antenne d'émission et les deuxièmes signaux d'émission sont émis par une deuxième antenne d'émission.

7. Procédé selon l'une des revendications 1 à 5,
**caractérisé en ce qu'**une première antenne d'émission et une deuxième antenne d'émission émettent respectivement en alternance les premiers signaux d'émission et les deuxièmes signaux d'émission.

8. Procédé selon l'une des revendications 1 à 5,
**caractérisé en ce que** les premiers signaux d'émission et les deuxièmes signaux d'émission sont émis par la même antenne d'émission.

9. Procédé selon l'une des revendications précédentes,
**caractérisé en ce que** les signaux de réception sont reçus par plusieurs antennes de réception, de préférence par au moins quatre, de manière particulièrement préférée par au moins huit.

10. Procédé selon l'une des revendications précédentes,
**caractérisé en ce que** des troisièmes et quatrièmes signaux d'émission sont émis simultanément sous forme de troisièmes et quatrièmes rampes de fréquence, des premiers et deuxièmes signaux d'émission et des troisièmes et quatrièmes signaux d'émission étant émis en alternance.

11. Procédé selon la revendication 10,
**caractérisé en ce que** les troisièmes et quatrièmes signaux d'émission sont des rampes de fréquence parallèles, de préférence descendantes.

12. Dispositif de mise en oeuvre d'un procédé selon l'une des revendications précédentes.
